# EUROPÄISCHE PATENTANMELDUNG

(11) **EP 3 935 932 A1**
(43) Veröffentlichungstag der Anmeldung: **12.01.2022**
(21) Anmeldenummer: 20184519.5
(22) Anmeldetag: 07.07.2020
(51) Int. Cl.: A01D 34/73, A01D 34/90

(54) **SCHNEIDMESSER FÜR EINEN SCHNEIDKOPF UND SCHNEIDKOPF FÜR EINE MOTORSENSE**

(71) Anmelder: Andreas Stihl AG & Co. KG, 71336 Waiblingen (DE)
(72) Erfinder: KLÖPFER, Johannes, 71686 Remseck am Neckar (DE); HITTMANN, Markus, 71384 Weinstadt (DE); RETHABER, Achim, 70736 Fellbach (DE); MÜLLER, Philipp, 74706 Osterburken (DE); MANDEL, Roland, 70329 Stuttgart (DE); KIELCZYK, Antje, 71711 Steinheim (DE)
(74) Vertreter: Karzel, Philipp

(57) **Zusammenfassung**

Die Erfindung betrifft ein Schneidmesser für einen Schneidkopf, umfassend einen Grundkörper (21) mit einer Befestigungsvorrichtung (22) zur Befestigung des Schneidmessers (20) an einem Schneidkopf (2) und eine Messerschneide (25, 25'). Der Grundkörper (21) und die Messerschneide (25, 25') bestehen aus einem biologisch abbaubaren Naturstoff. Alternativ besteht der Grundkörper (21) aus einem nicht biologisch abbaubaren Kunststoff und die Messerschneide (25, 25') zumindest teilweise aus einem biologisch abbaubaren Werkstoff.

## Beschreibung

Die Erfindung betrifft ein Schneidmesser der im Oberbegriff des Anspruchs 1 angegebenen Gattung und einen Schneidkopf der im Oberbegriff des Anspruchs 15 angegebenen Gattung.

Es sind Schneidköpfe für eine Motorsense bekannt, die einen Hauptkörper und ein an einer Befestigungsaufnahme des Hauptkörpers gehaltenes Schneidmesser umfassen. Derartige Schneidmesser sind üblicherweise einteilig ausgebildet und aus einem Kunststoff mittels Spritzgussverfahren hergestellt. Nachteilig an derartigen Schneidmessern ist, dass der Kunststoff nicht biologisch abbaubar ist. Im Betrieb eines solchen Schneidmessers entstehen durch Abrasion kleinste Partikel, die in das natürliche Umfeld gelangen, sich dort jedoch nicht abbauen. Derartige Kunststoffpartikel stellen eine Umweltbelastung dar.

Der Erfindung liegt die Aufgabe zugrunde, ein Schneidmesser der gattungsgemäßen Art derart weiterzubilden, dass ein umweltschonender Einsatz des Schneidmessers ermöglicht ist.

Die Aufgabe wird durch ein Schneidmesser nach Anspruch 1 gelöst.

Der Erfindung liegt die weitere Aufgabe zugrunde, einen Schneidkopf der gattungsgemäßen Art derart weiterzubilden, dass ein umweltschonender Betrieb des Schneidkopfes an einer Motorsense ermöglicht ist.

Die Aufgabe wird durch einen Schneidkopf nach Anspruch 15 gelöst.

Das erfindungsgemäße Schneidmesser umfasst einen Grundkörper mit einer Befestigungsvorrichtung zur Befestigung des Schneidmessers an einem Schneidkopf und eine Messerschneide. Der Grundkörper und die Messerschneide bestehen aus einem biologisch abbaubaren Naturstoff. In einer weiteren Variante besteht der Grundkörper aus einem nicht biologisch abbaubaren Kunststoff, wobei die Messerschneide zumindest teilweise aus einem biologisch abbaubaren Werkstoff besteht. Das Schneidmesser ist Teil des Schneidkopfes. Der Schneidkopf umfasst einen Hauptkörper, wobei der Hauptkörper im Betrieb einer Motorsense um seine Drehachse drehend antreibbar ist. An dem Hauptkörper ist mindestens eine Befestigungsaufnahme vorgesehen, wobei das Schneidmesser an der Befestigungsaufnahme gehalten ist.

Im Betrieb des Schneidkopfes schneidet das Schneidmesser Gestrüpp, Gräser und dgl. Die Messerschneide des Schneidmessers ist der Part des Schneidmessers, der auf das Schnittgut wirkt und höchsten Belastungen ausgesetzt ist. Unter den Belastungen tritt eine Abrasion an der Messerschneide auf, wodurch sich kleinste Partikel von der Messerschneide lösen und zu Boden fallen. Da die Messerschneide aus einem biologisch abbaubaren Werkstoff besteht, zersetzen sich die gelösten Partikel, wodurch eine Umweltbelastung vermieden ist. Dadurch kann ein umweltschonender Betrieb einer Motorsense mit dem Schneidmesser erfolgen.

Der biologisch abbaubare Werkstoff ist vorzugsweise ein Werkstoff insbesondere aus der Gruppe der biologisch abbaubaren Naturwerkstoffe und der biologisch abbaubaren Kunststoffe. Diese Werkstoffe haben gemein, dass diese sich vollständig zersetzen und kein Mikroplastik/-kunststoff entsteht. Die Messerschneide besteht vorzugsweise aus einem Holzwerkstoff, insbesondere aus einem Hartholz. Unter Holzwerkstoffen werden Werkstoffe verstanden, die aus Holz hergestellt sind, wie beispielsweise Vollholz, verklebtes Vollholz, Furnierholz, Multiplex-Platten, Sperrholz, Faserplatten. Zu Faserplatten zählen u. a. Spanplatten, Grobspanplatten, MDF. Durch den Einsatz von Hartholz weist die Messerschneide eine besonders hohe Widerstandsfähigkeit auf, die zu einer hohen Lebensdauer der Messerschneide und des Schneidmessers führt.

Es ist vorteilhaft vorgesehen, dass die Messerschneide an dem Grundkörper ausgebildet ist. Die Messerschneide und der Grundkörper sind vorzugsweise einteilig ausgebildet und bestehen aus dem gleichen Werkstoff. Selbst bei abgenutzter Messerschneide lösen sich keine umweltschädlichen Teile vom Grundkörper, da dieser ebenfalls aus entsprechend biologisch abbaubarem Naturwerkstoff gebildet ist. Auch bei Austausch des gesamten Schneidmessers entsteht lediglich umweltverträglicher Restabfall.

Es ist vorteilhaft vorgesehen, dass der Grundkörper einen Träger und einen Schneideinsatz umfasst, wobei der Schneideinsatz durch den Träger gehalten ist und die Messerschneide an dem Schneideinsatz angeordnet ist. Dies ermöglicht den Einsatz unterschiedlicher Werkstoffe für das Schneidmesser. So kann spezifisch der am Schneidmesser auftretenden Belastungen der entsprechende Werkstoff gewählt werden. So ist der Träger vorzugsweise aus einem biologisch nicht abbaubaren Kunststoff gebildet. Die Befestigungsvorrichtung kann insbesondere wie bei etablierten Vollkunststoffmessern als Öffnung im Grundkörper ausgebildet sein. Ein derartiger Kunststoff weist eine hohe Festigkeit und entsprechende Gleiteigenschaften auf, die besonders für die Befestigungsvorrichtung von Vorteil sind. Der Schneideinsatz besteht vorzugsweise aus einem biologisch abbaubaren Werkstoff.

Die Messerschneide ist vorzugsweise an dem Schneideinsatz ausgebildet. Vorzugsweise ist der Schneideinsatz mit der Messerschneide einteilig aus dem gleichen Werkstoff gebildet. Bei Verschleiß der Messerschneide ist es ausreichend, lediglich den Schneideinsatz auszutauschen. Der Träger kann hingegen erneut verwendet werden.

Der Schneideinsatz ist mindestens teilweise durch den Träger umspritzt. Der Schneideinsatz ist vorzugsweise an dem Träger in Längsrichtung des Schneidmessers formschlüssig gehalten ist. Die genannten Verbindungstechniken zwischen Träger und Schneideinsatz können auch kombiniert werden. Dadurch können besonders hohe Verbundkräfte zwischen Träger und Schneideinsatz hergestellt werden. Dies erlaubt einen besonders robusten Betrieb des Schneidmessers.

Es ist vorteilhaft vorgesehen, dass im Grundkörper mindestens eine Aussparung, insbesondere mindestens ein Schlitz, vorgesehen ist. Derartige Aussparungen dienen zur Erhöhung der Elastizität des Grundkörpers. Bei Stoßbelastung auf die Messerschneide federt die Stützstruktur des Grundkörpers durch die Aussparungen ein und der Stoß wird abgedämpft. Dadurch reduziert sich die auf die Messerschneide wirkende Belastung. Ferner führen die Aussparungen am Grundkörper auch zur Gewichtsreduktion und damit zur Trägheitsreduktion des Schneidmessers. Vorzugsweise sind die Aussparungen an dem Schneideinsatz vorgesehen. Ist der mit den Aussparungen versehene Schneideinsatz durch den Träger umspritzt, wird durch die Aussparungen ein Formschluss zwischen Schneideinsatz und Träger erzeugt.

Es ist vorzugsweise vorgesehen, dass die Messerschneide aus zwei Außenschichten und einer zwischen den beiden Außenschichten angeordneten Innenschicht gebildet ist, wobei die Außenschichten eine geringere Festigkeit als die Innenschicht aufweisen. Bei Belastung auf die Messerschneide verschleißen zuerst die Außenschichten, wodurch sich eine keilartige Querschnittskontur der Messerschneide bildet. Demnach erfolgt im Betrieb des Schneidmessers eine Selbstschärfung der Messerschneide. Die Außenschichten und die Innenschicht können jeweils auch aus mehreren Einzelschichten bestehen.

Die Messerschneide weist vorzugsweise eine wasserabweisende Beschichtung auf. Dadurch wird der Verschleiß an der Messerschneide durch Nässe reduziert und die Lebensdauer des Schneidmessers erhöht.

Es ist vorteilhaft vorgesehen, dass der Schneidkopf eine in Arbeitshaltung der Motorsense dem Boden zugewandte Unterseite aufweist, wobei die Unterseite des Schneidkopfes aus einem biologisch abbaubaren Werkstoff besteht. Dadurch ist der durch Verschleiß entstehende Abrieb des Schneidkopfes umweltfreundlich.

Weitere Merkmale der Erfindung ergeben sich aus der Beschreibung und der Zeichnung, in der nachfolgend im Einzelnen beschriebene Ausführungsbeispiele der Erfindung dargestellt sind. Es zeigen:
- Fig. 1: in einer schematischen Seitenansicht eine Motorsense mit einem Schneidkopf,
- Fig. 2: in einer perspektivischen Darstellung den erfindungsgemäßen Schneidkopf mit Schneidmesser,
- Fig. 3: in einer schematischen Darstellung in Draufsicht ein erfindungsgemäßes Schneidmesser,
- Fig. 4: in einer schematischen Seitendarstellung das Schneidmesser nach Fig. 3,
- Fig. 5: in einer schematischen Seitendarstellung das Schneidmesser nach Fig. 3 mit einer alternativen Schneidengeometrie,
- Fig. 6: in einer schematischen Darstellung in Draufsicht das erfindungsgemäße Schneidmesser mit Träger und Schneideinsatz,
- Fig. 7: in einer Seitenansicht das Schneidmesser nach Fig. 6,
- Fig. 8: in einer schematischen Darstellung in Draufsicht ein Schneidmesser mit formschlüssig gehaltenem Schneideinsatz,
- Fig. 9: in einer Schnittdarstellung das Schneidmesser entlang der Pfeile IX nach Fig. 9,
- Fig. 10 bis 13: schematische Darstellungen in Draufsicht erfindungsgemäßer Schneidmesser mit Aussparungen im Schneideinsatz,
- Fig. 14: in einer schematischen Schnittdarstellung eine mehrschichtige Messerschneide,
- Fig. 15: in einer schematischen perspektivischen Explosionsdarstellung eine Messerschneide mit verschiedenen Schichten und
- Fig. 16: in einer schematischen Darstellung in Draufsicht ein erfindungsgemäßes Messer mit sich verändernder Messerschneide.

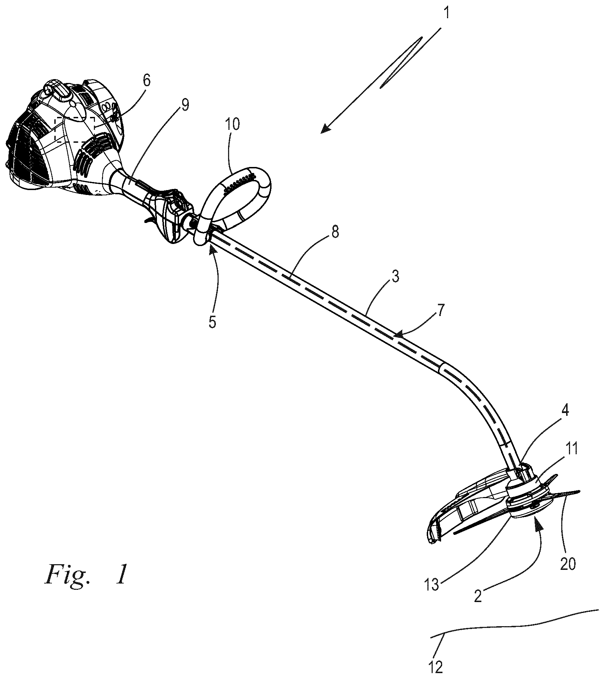

In Fig. 1 ist ein handgeführtes Arbeitsgerät 1 von der Bauart eine Motorsense in einer perspektivischen Seitenansicht dargestellt. Ein Schneidkopf 2 ist an einem ersten, unteren Ende 4 eines Führungsrohres 3 vorgesehen, an dessen zweitem, oberen Ende 5 ein schematisch dargestellter Antriebsmotor 6 gehalten ist. Der Antriebsmotor 6 treibt eine Verbindungswelle 7 an, die vorteilhaft als flexible Welle 8 ausgebildet ist und der Krümmung des Führungsrohres 3 folgt. Im Bereich des oberen Endabschnittes des Führungsrohres 3 ist ein Bediengriff 9 vorgesehen, der von dem Führungsrohr 3 durchragt wird. Dem Bediengriff 9 benachbart ist ein am Führungsrohr 3 befestigter Rundgriff 10 montiert.

Durch die Krümmung des Führungsrohres 3 ist die Arbeitslage des Schneidkopfes 2 relativ zum Boden bestimmt, ohne dass ein Winkelgetriebe notwendig ist. Alternativ kann der Schneidkopf 2 auch über ein Winkelgetriebe angetrieben sein. Der Schneidkopf 2 ist zweckmäßig möglichst nah an dem ersten, oberen Ende 5 des Führungsrohres 3 angeordnet und vorteilhaft mit einem Wickelschutz 11 versehen, so dass ein Einwickeln von Gras in den Antriebsstrang vermieden ist. Auch eine andere Anordnung des Antriebsmotors 6, insbesondere am unteren Ende 4 des Führungsrohres 3, kann zweckmäßig sein.

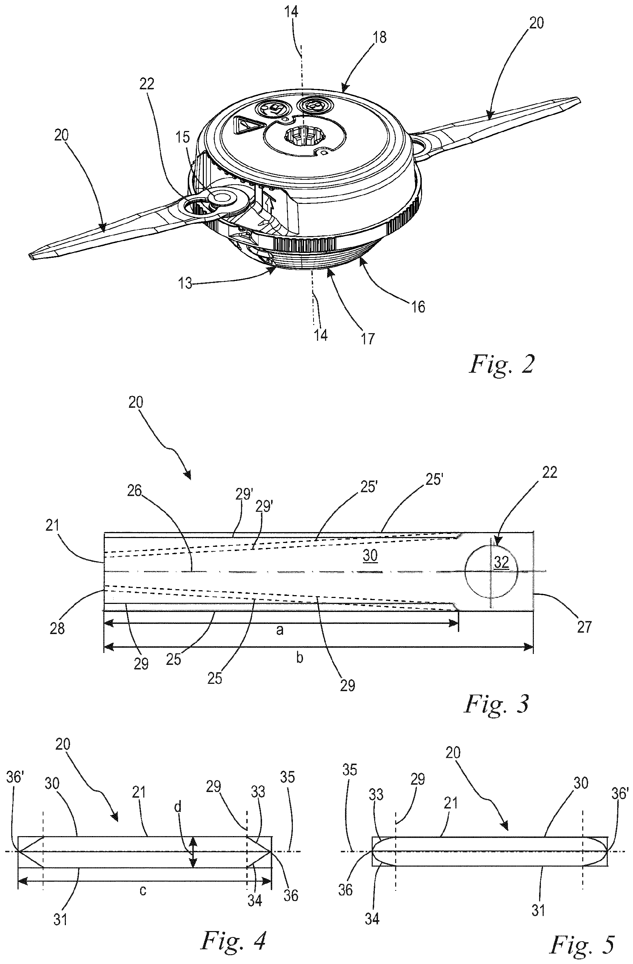

Wie in Fig. 2 gezeigt, umfasst der Schneidkopf 2 einen Hauptkörper 13 und mindestens ein am Hauptkörper 13 gehaltenes Schneidmesser 20. Der Schneidkopf 2 umfasst zudem ein Befestigungselement zur Befestigung des Schneidkopfes 2 auf einer Abtriebswelle des handgeführten Arbeitsgerätes 1. Das Befestigungselement kann Teil des Hauptkörpers 13 sein oder als gegenüber dem Hauptkörper 13 separat ausgebildetes Element ausgebildet sein. Der Schneidkopf 2 ist durch den Antriebsmotor 6 über die Verbindungswelle 7 um seine Drehachse 14 drehend antreibbar. Im Ausführungsbeispiel nach Fig. 2 sind zwei Schneidmesser 20 am Hauptkörper 13 befestigt. In einer alternativen Ausführung kann es zweckmäßig sein, auch mehr als zwei Schneidmesser 20 an dem Hauptkörper 13 zu befestigen, wobei die Schneidmesser 20 in gleichmäßigen Winkelabständen in Umfangsrichtung der Drehachse 14 an dem Hauptkörper 13 angeordnet sind. Der Schneidkopf 2 ist in Arbeitshaltung des handgeführten Arbeitsgerätes 1 dem Boden 12 zugewandt. Im Betrieb des Schneidkopfes 2 können mittels der um die Drehachse 14 rotierenden Schneidmesser 20 Gras, Gestrüpp oder ähnliches geschnitten werden.

Wie in Fig. 3 gezeigt, umfasst das Schneidmesser 20 einen Grundkörper 21 mit einer Befestigungsvorrichtung 22 und eine Messerschneide 25. Der Grundkörper 21 erstreckt sich in seiner Längsrichtung 26 von seiner ersten Stirnseite 27 bis hin zu seiner zweiten Stirnseite 28. Der Grundkörper 21 umfasst zwei Längsseiten 29, 29', eine Oberseite 30 und eine Unterseite 31, die sich von der ersten Stirnseite 27 bis zur zweiten Stirnseite 28 erstrecken. Im Ausführungsbeispiel nach Fig. 3 sind an beiden Längsseiten 29, 29' des Grundkörpers 21 jeweils eine Messerschneide 25 angeordnet. In einer alternativen Ausführung kann es zweckmäßig sein, an lediglich einer der zwei Längsseiten 29, 29', nämlich an der in Schnittrichtung vorderen Längsseite, die Messerschneide 25, 25' anzuordnen.

Die Befestigungsvorrichtung 22 ist im Ausführungsbeispiel nach Fig. 3 als eine Befestigungsöffnung 32 ausgebildet. In der bevorzugten Ausführung des Schneidmessers 20 ist die Befestigungsöffnung 32 zylindrisch ausgebildet und erstreckt sich von der Oberseite 30 zur Unterseite 31 des Grundkörpers 21. Das Schneidmesser 20 kann an seiner Befestigungsvorrichtung 22 durch eine Befestigungsaufnahme 15 des Schneidkopfes 2 am Hauptkörper 13 des Schneidkopfes 2 befestigt werden. Die Befestigungsvorrichtung 22 ist im Ausführungsbeispiel benachbart der ersten Stirnseite 27 des Grundkörpers 21 angeordnet. Im vorliegenden Ausführungsbeispiel ist das Schneidmesser 20 über einen zylindrischen Lagerbolzen des Hauptkörpers 13 aufzunehmen, der die zylindrische Befestigungsöffnung 32 des Schneidmessers 20 durchragt. Dadurch ist das Schneidmesser 20 an dem Hauptkörper 13 des Schneidkopfes 2 schwenkbar gelagert. Stößt das Schneidmesser 20 im Betrieb auf einen harten Gegenstand, kann das Schneidmesser 20 entgegen der Drehrichtung des Schneidkopfes 2 rückschwenken, wodurch Beschädigungen am Schneidmesser 20 vermieden werden.

Wie in Fig. 2 gezeigt, ist die am Hauptkörper 13 des Schneidkopfes 2 angeordnete Befestigungsaufnahme 15 als zylindrischer Lagerbolzen ausgebildet. Der zylindrische Lagerbolzen erstreckt sich in Richtung der Drehachse 14, wobei am Hauptkörper 13 ein Zugangsbereich um den zylindrischen Lagerbolzen vorgesehen ist, wodurch das Schneidmesser 20 an dem Lagerbolzen eingehängt werden kann. Die Befestigungsvorrichtung 22 des Schneidmessers 20 ist als eine Schlüssellochöffnung, also zwei miteinander verbundene, verschieden große Öffnungen, ausgebildet. Zur Befestigung des Schneidmessers 20 an dem Schneidkopf 2 ist das Schneidmesser 20 über die größere Öffnung auf die Befestigungsaufnahme 15 aufzufädeln und anschließend ausgehend von der Drehachse 14 radial nach außen in die kleinere Öffnung zu ziehen. Im Betrieb des Schneidkopfes 2 wird das Schneidmesser 20 durch die Fliehkräfte in der kleinen Öffnung der Schlüssellochöffnung gehalten.

Wie in Fig. 3 dargestellt, besitzt die Messerschneide 25, 25' eine in Längsrichtung 26 des Schneidmessers 20 gemessene Länge a, die geringer ist als die in Längsrichtung 26 gemessene Länge b des Schneidmessers 20. Die Länge a der Messerschneide 25, 25' entspricht vorzugsweise höchstens 90%, insbesondere in etwa 80% der Länge b des Schneidmessers 20. Die Länge b der Messerschneide 25, 25' entspricht in einem am Hauptkörper 13 des Schneidkopfes 2 befestigtem Zustand vorzugsweise der Länge des Schneidmesserabschnittes, der radial bezüglich der Drehachse 14 aus dem Grundkörper 13 des Schneidkopfes 2 übersteht. Dies ist der Abschnitt des Schneidmessers 2, der im Betrieb des Schneidkopfes 2 das Gestrüpp, Gras, etc. kontaktiert.

In den Figuren 4 und 5 sind zwei Ausführungen des Schneidmessers 20 mit verschiedenen Geometrien der Messerschneiden 25, 25' in Ansicht auf die zweite Stirnseite 28 des Schneidmessers 20 gezeigt. Die Messerschneide 25, 25' ist derjenige Teil des Schneidmessers 20, der beim Schneidvorgang wirksam ist. Das Schneidmesser 20 weist eine Schnittebene 35 auf, in der das Schneidmesser 20 beim Schneidvorgang rotierend bewegt wird. Die Messerschneide 25, 25' ist aus einer ersten Schneidfläche 33 und einer zweiten Schneidfläche 34 gebildet, wobei die erste Schneidfläche 33 und die zweite Schneidfläche 34 sich ausgehend von der Längsseite 29, 29' hin zur Schnittebene 35 verjüngend angeordnet sind. Dabei bilden die erste Schneidfläche 33 und die zweite Schneidfläche 34 eine keilartige Messerschneide 25, 25'. Gemäß dem Ausführungsbeispiel nach Fig. 4 verjüngen sich die erste Schneidfläche 33 und die zweite Schneidfläche 34 keilförmig und bilden eine Schneidkante 36. Gemäß dem Ausführungsbeispiel nach Fig. 5 sind die erste Schneidfläche 33 und die zweite Schneidfläche 34 im Querschnitt des Schneidmessers 20 bogenförmig ausgebildet, wodurch die Schneidkante 36 verrundet ist. In alternativen Ausführungen können auch andere Schneidengeometrien zweckmäßig sein, die das Schneiden von Gestrüpp und Gräsern ermöglichen.

Wie in den Figuren 4 und 5 gezeigt, weist das Schneidmesser 20 eine gemittelte Breite c auf, die dem über die Länge a der Messerschneide 25, 25' gemittelten Abstand der beiden Schneidkanten 36, 36' zueinander entsprechen. Weist das Schneidmesser 20 lediglich eine Messerschneide 25 auf, so ist der gemittelte Abstand c zwischen der Schneidkante 36 der einen Messerschneide 25 und derjenigen Längsseite 29' des Schneidmessers 20 zu messen, an der keine Messerschneide angeordnet ist. Ferner weist das Schneidmesser 20 eine senkrecht zur Schnittebene 35 gemessene Höhe d auf, die dem entlang der Länge a der Messerschneide 25, 25' gemittelten Abstand zwischen der Oberseite 30 und der Unterseite 31 des Schneidmessers 20 entspricht. Die Breite c des Schneidmessers 20 entspricht mindestens der doppelten, vorzugsweise mindestens der dreifachen, insbesondere mindestens der vierfachen Höhe d des Schneidmessers 20. Die Länge a der Messerschneide 25, 25' entspricht vorzugsweise mindestens der doppelten Breite c des Schneidmessers 20.

Der in Fig. 3 gezeigte Grundkörper 21 des Schneidmessers 20 sowie die Messerschneide 25, 25' sind vollständig aus einem biologisch abbaubaren Naturwerkstoff gebildet. Ein biologisch abbaubarer Naturstoff ist ein chemisch nicht veränderter Stoff natürlichen Ursprungs (z. B. Holz, Holzfasern), die gemäß DIN EN 13432 ohne Prüfung als abbaubar anzusehen sind. Im Rahmen dieser Anmeldung sind zu den biologisch abbaubaren Naturstoffen auch Holzwerkstoffe zu zählen, deren Bindemittelanteil zu vernachlässigen ist, sofern dieser vorzugsweise geringer ist als 30%, insbesondere geringer als 20%, vorteilhaft geringer als 10% der Masse des Holzwerkstoffes. Durch die Verwendung eines biologisch abbaubaren Naturstoffes ist eine umweltfreundliche Verwendung des Schneidmessers 20 gewährleistet. Der während des Schneidvorgangs entstehende Abrieb am Schneidmesser 20 fällt zu Boden und wird biologisch abgebaut. Das in Ausführung nach Fig. 3 gezeigte Schneidmesser 20 ist einteilig ausgebildet, demnach die Messerschneide 25, 25' an dem Grundkörper 21 des Schneidmessers 20 ausgebildet ist. Das Ausführungsbeispiel des Schneidmessers 20 nach Fig. 3 besteht vorzugsweise aus einem Holzwerkstoff, insbesondere aus Hartholz, vorzugsweise Buche, Eiche oder Esche. Dadurch besitzen Grundkörper 21 und Messerschneide 25, 25' eine ausreichend hohe Festigkeit, die eine Langlebigkeit des Schneidmessers 20 gewährleisten.

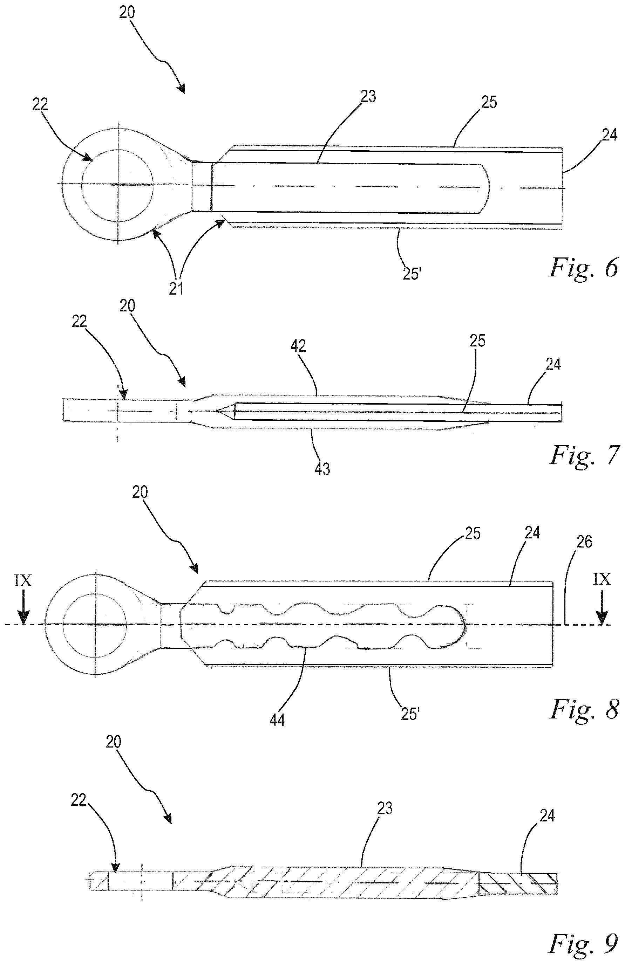

In Fig. 6 ist ein weiteres Ausführungsbeispiel des erfindungsgemäßen Schneidmessers 20 gezeigt, wobei der Grundköper 21 einen Träger 23 und einen Schneideinsatz 24 umfasst. Der Schneideinsatz 24 ist in dem Träger 23 gehalten. An dem Schneideinsatz 24 ist die Messerschneide 25, 25' angeordnet. Die Messerschneide 25, 25' besteht aus einem biologisch abbaubaren Werkstoff. Zu den biologisch abbaubaren Werkstoffen zählen neben den biologisch abbaubaren Naturwerkstoffen auch die biologisch abbaubaren Kunststoffe gemäß DIN EN 13432. Bioabbaubarkeit bedeutet, dass sich ein Material nach einer festgeschriebenen Zeit, unter definierten Temperatur-, Sauerstoff- und Feuchtebedingungen in der Anwesenheit von Mikroorganismen oder Pilzen zu einem Großteil, insbesondere zu mindestens 70%, vorzugsweise zu mindestens 90% zu Wasser, Kohlendioxid und Biomasse abgebaut haben muss. Biologisch abbaubare Kunststoffe bestehen aus Polymeren, die durch Mikroorganismen wie Pilze oder Bakterien, mittels Enzymen unter bestimmten Bedingungen zersetzt werden können. Durch den vollständigen Abbau des Kunststoffes wird die Entstehung von Mikroplastik vermieden. Zu biologisch abbaubaren Kunststoffen zählen insbesondere die Kunststoffe Polyhydroxyalkanoat (PHA), Polyhydroxybutyrat (PHB), Polyhydroxyvalerianat (PHV), Polyalctide (PLA), thermoplastische Stärke (TPS) bzw. Stäkkeblends, Zellglas, abbaubare Polyester, Polycaprolacton (PCL), Polybutylenadipat-Terephthalat (PBAT), Polybutylensuccinat (PBS). Der biologisch abbaubare Werkstoff ist vorzugsweise ARBOFORM^{®}. Der Werkstoff besteht zu 100% aus nachwachsenden Rohstoffen und ist biologisch abbaubar. Bestandteile dieses Werkstoffs sind Lignin und Naturfasern wie Flachs, Hanf oder andere Faserpflanzen und natürliche Additive. Der Träger 23 des Grundkörpers 21 hingegen besteht zumindest teilweise, insbesondere vollständig aus einem nicht biologisch abbaubaren Kunststoff. Ein derartiger Kunststoff ist vorzugsweise Polyamid (PA).

Im Ausführungsbeispiel nach Fig. 6 ist die Messerschneide 25, 25' an dem Schneideinsatz ausgebildet. Demnach sind der Schneideinsatz 24 und die Messerschneide 25, 25' einteilig ausgebildet. Der Schneideinsatz 24 ist vorzugsweise aus einem biologisch abbaubaren Naturwerkstoff, insbesondere aus einem Holzwerkstoff, vorzugsweise aus einem Hartholz gebildet.

In einer alternativen Ausführung kann die Messerschneide 25, 25' unmittelbar an dem Träger 23 ausgebildet sein. Insbesondere biologisch abbaubare Kunststoffe weisen eine nur geringe Festigkeit auf. So ist vorzugsweise die Messerschneide 25, 25' aus einem derartigen biologisch abbaubaren Kunststoff gebildet, der aufgrund der geringen Festigkeit einem hohen Verschleiß im Betrieb des Schneidkopfes 2 unterliegt. Der Träger 23 ist aus einem biologisch nicht abbaubaren Kunststoff mit hoher Festigkeit gebildet und dient als Stützstruktur der Messerschneide 25, 25'. Der Träger 23 ist nicht als Verschleißteil ausgelegt. Ist die Messerschneide 25, 25' verschlissen, kann diese ausgetauscht werden.

Wie in den Figuren 6 und 7 gezeigt, ist an dem Träger 23 die Befestigungsvorrichtung 22 zur Befestigung des Schneidmessers 20 an einen Schneidkopf 2 ausgebildet. Der Träger 23 umfasst einen ersten Schenkel 42 und einen zweiten Schenkel 43. Der Schneideinsatz 24 ist zwischen dem ersten Schenkel 42 und dem zweiten Schenkel 43 des Trägers 23 gehalten. Der Schneideinsatz 24 ist im Ausführungsbeispiel durch den ersten Schenkel 42 und den zweiten Schenkel 43 umspritzt. Alternativ kann der Schneideinsatz 24 auch mit dem Träger 23 verklebt sein. In einer alternativen, nicht dargestellten Ausführung können zudem Verbindungsbolzen vorgesehen sein, die den Träger 23 und den Schneideinsatz 24 durchragen und diese dadurch formschlüssig miteinander verbinden. In einer alternativen Ausgestaltung des Trägers 23 können die beiden Schenkel 42, 43 seitlich geschlossen ausgebildet sein, so dass der Träger 23 eine Aufnahmetasche für den Schneideinsatz 24 bildet.

In einer alternativen Ausgestaltung des Schneidmessers 20 gemäß den Figuren 8 und 9 weist der Schneideinsatz 24 eine Aussparung 44 auf, die in Längsrichtung 26 des Schneidmessers 20 Hinterschnitte bildet. Der Träger 23 ist in der Aussparung 44 des Schneideinsatzes 24 eingegossen und dadurch in Längsrichtung 26 des Schneidmessers 20 formschlüssig mit dem Schneideinsatz 24 verbunden. Die Geometrie der Aussparung ist an die zwischen dem Träger 23 und dem Schneideinsatz 24 zu übertragenden Kräften anzupassen.

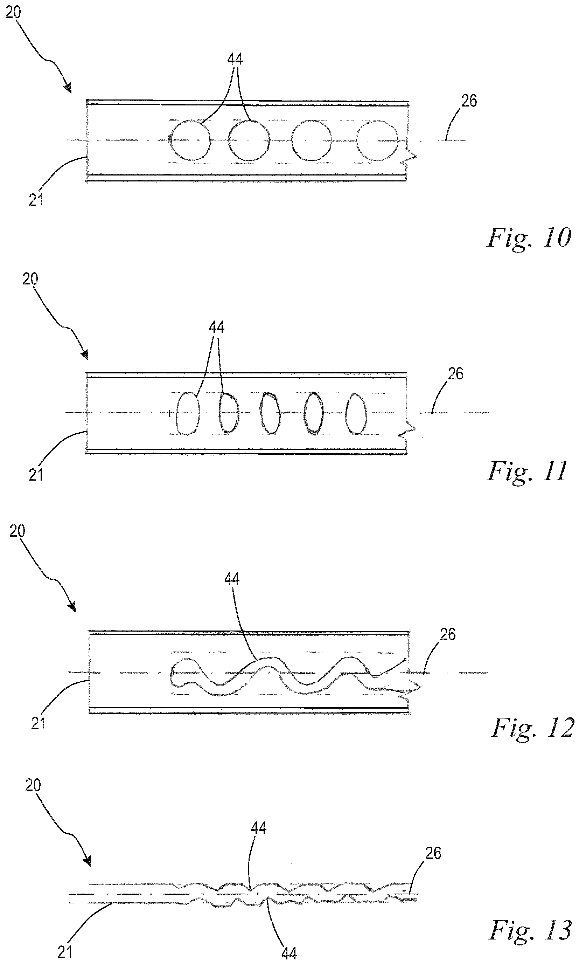

In den Figuren 10 bis 13 sind Ausführungsvarianten des Schneidmessers 20 gezeigt, in welchen der Grundkörper 21 entsprechende Aussparungen 44 zur formschlüssigen Verbindung zwischen Schneideinsatz 24 und Träger 23 aufweist. Der Träger 23 wird an den Schneideinsatz 24 angespritzt, wobei die Aussparungen 44 durch den Werkstoff des Trägers 23 gefüllt werden. Dabei bilden der Träger 23 und der Schneideinsatz 23 eine formschlüssige Verbindung. In Fig. 10 sind an dem Schneideinsatz 24 vier Aussparungen 44 als kreisrunde Öffnungen vorgesehen. Die Aussparungen 44 sind hintereinander in Längsrichtung 26 des Schneidmessers 20 angeordnet. Es kann zweckmäßig sein, eine andere Anordnung, Anzahl, Form und Größe der Aussparungen 44 vorzusehen. So sind im Ausführungsbeispiel des Schneidmessers 20 nach Fig. 11 fünf hintereinander angeordnete elliptische Aussparungen 44 im Schneideinsatz 24 vorgesehen. Im Ausführungsbeispiel des Schneidmessers 20 nach Fig. 12 ist eine einzige, serpentinenförmige Aussparung 44 vorgesehen, die sich in Längsrichtung 26 des Schneidmessers 20 erstreckt. Alternativ können die Aussparungen 44, wie in Fig. 13 gezeigt, derart ausgebildet sein, dass sich eine Art Riffelung am Schneideinsatz 24 bildet. Die Aussparungen 44 können am Grundkörper 21 des Schneidmessers 20, insbesondere am Träger 23 und/oder am Schneideinsatz 24 ausgebildet sein. Die Aussparungen 44 können auch zur Gewichtsreduzierung oder zur Steigerung der Elastizität am Grundkörper 21 vorgesehen sein.

In einer weiteren Ausführung des Schneidmessers 20 sind Entlastungeschlitze vorgesehen, die analog der Aussparungen 44 (Fig. 10 bis 12) im Schneideinsatz 24 ausgebildet sind. Derartige Entlastungsschlitze bewirken eine elastische Einfederung der Messerschneide 25, 25'. Insbesondere bei Schneideinsätzen 24 aus Holz bewirken die Entlastungsschlitze eine Nachgiebigkeit der Messerschneide 25, 25', die zur Entlastung der Messerschneide 25, 25' führt. Dadurch wird die Lebensdauer der Messerschneide 25, 25' und des Schneideinsatzes 24 erhöht.

Das erfindungsgemäße Schneidmesser 20 ist nicht auf die in den Figuren dargestellte Gestaltung, nämlich die parallel zueinander ausgerichteten Längsseiten 29, 29' des Grundkörpers 21, festgelegt. Es kann in einer alternativen Ausgestaltung des Schneidmessers 20 zweckmäßig sein, einen sichelförmigen Grundkörper 21 vorzusehen. Es kann auch zweckmäßig sein, wie in Fig. 3 gestrichelt dargestellt, einen zumindest teilweise trapezförmigen Grundkörper 21 vorzusehen. In einer derartigen alternativen Ausführung des Schneidmessers 20 verlaufen die Längsseiten 29, 29' in Richtung der zweiten Stirnseite 28 des Grundkörpers 21 aufeinander zu, wodurch sich die Breite c des Grundkörpers 21 in Richtung von der Befestigungsvorrichtung 22 weg reduziert. Es kann zweckmäßig sein, neben der Messerschneide 25, 25' weitere Schneidelemente, beispielsweise stachelartige Schneiden vorzusehen, die selbigen Werkstoff wie die Messerschneide 25, 25' am Grundkörper 21 aufweist. In einem weiteren erfindungsgemäßen Ausführungsbeispiel ist das Schneidmesser 20 als ein Doppelmesser ausgebildet, wonach die Befestigungsvorrichtung 22 mittig zwischen der ersten Stirnseite 27 und der zweiten Stirnseite 28 angeordnet ist. Das Doppelmesser umfasst mindestens zwei Messerschneiden 25, 25', wobei die eine der zwei Messerschneiden zwischen der Befestigungsvorrichtung 22 und der ersten Stirnseite 27 am Grundkörper 21 in Schneidrichtung angeordnet ist und die andere der zwei Messerschneiden zwischen der Befestigungsvorrichtung 22 und der zweiten Stirnseite 28 am Grundkörper 21 in Schneidrichtung angeordnet ist. Das Doppelmesser kann auch unmittelbar an einer Abtriebswelle des handgeführten Arbeitsgerätes 1 befestigt werden.

Alternativ kann das erfindungsgemäße Schneidmesser 20 auch an einem Rasenmäher oder einem anderen Arbeitsgerät zum Rasen- und/oder Gestrüpp-Schneiden verwendet werden. Zu derartigen Arbeitsgeräten zählen auch nicht handgeführte Arbeitsgeräte, insbesondere Rasenmähroboter, vorzugsweise Rasenmähtraktoren. In einer alternativen Ausführung kann das Schneidmesser 20 auch als eine Messerscheibe ausgebildet sein. Demnach hat der Grundkörper 21 die Form einer kreisrunden Scheibe, wobei die Messerschneide 25 am Umfang des Grundkörpers ausgebildet ist. Die Messerschneide 25 kann ebenfalls kreisrund ausgebildet sein. Auch eine gezackte Messerschneide 25 oder andere Geometrien der Messerschneide 25 können zweckmäßig sein.

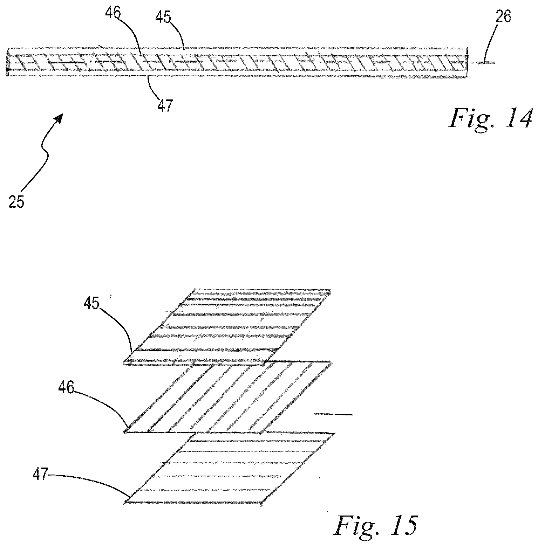

In den Figuren 14 und 15 ist die Messerschneide 25 als eine sich selbst nachschärfende Schneide ausgebildet. Die Messerschneide 25 umfasst eine erste Außenschicht 45, eine zweite Außenschicht 47 und eine zwischen der ersten Außenschicht 45 und der zweiten Außenschicht 47 angeordnete Innenschicht 46. Die Innenschicht 46 weist eine höhere Festigkeit auf als die erste Außenschicht 45 und die zweite Außenschicht 47. Die verschiedenen Festigkeiten der Schneidschichten führen zu unterschiedlichem Verschleiß der einzelnen Schneidschichten. Im Betrieb des Schneidmessers 20 verschleißen die Außenschichten 45, 47 der Messerschneide 25 schneller als die Innenschicht 46, wodurch sich eine keilartige Schneidengeometrie der Messerschneide 25 einstellt. Um die verschiedenen Festigkeiten der Schneidschichten zu erzielen, sind die Außenschichten 45, 47 vorzugsweise aus einem Weichholz, die Innenschicht 46 aus einem Hartholz gebildet. Alternativ können die Schneidschichten in den gleichen Werkstoffen ausgebildet sein, und sich lediglich in der Orientierung der Werkstofffasern unterscheiden. So bestehen die Außenschichten 45, 47 aus einem Werkstoff mit längs zur Messerschneide 25 orientierten Fasern, wobei die Innenschicht 46 aus einem Werkstoff mit quer zur Messerschneide 25 orientierten Fasern besteht. Die Werkstoffe mit den zur Messerschneide 25 längs orientierten Fasern verschleißen deutlich schneller als die Innenschicht 46 bestehend aus dem Werkstoff mit den zur Messerschneide 25 quer orientierten Fasern. Selbstverständlich können die verschiedenen Festigkeiten der Außenschichten in Kombination aus unterschiedlichen Werkstoffen und verschieden orientierten Fasern gebildet werden.

Die Messerschneide 25, 25' des Schneidmessers 20 ist vorzugsweise gegen Feuchtigkeit behandelt. Insbesondere für eine Messerschneide 25, 25' aus einem Holzwerkstoff ist die Messerschneide 25, 25' wasserabweisend behandelt. Demnach kann die Messerschneide 25, 25' mit wasserabweisenden Substanzen, insbesondere mit einem Öl oder mit einem Wachs eingelassen sein, oder mit einer wasserabweisenden Beschichtung versehen sein. Selbige wasserabweisende Behandlung ist vorzugsweise an dem Grundkörper 21, insbesondere am Schneideinsatz 24, des Schneidmessers 20 vorzusehen, sofern diese aus einem Holzwerkstoff bestehen.

Der in Fig. 2 gezeigte Schneidkopf 2 umfasst eine nicht näher dargestellte Befestigungsaufnahme zur Befestigung des erfindungsgemäßen Schneidmessers 20. Die Befestigungsaufnahme ist an dem Hauptkörper 13 des Schneidkopfes 2 vorgesehen und wirkt mit der Befestigungsvorrichtung 22 des Schneidmessers 20 zusammen. In einer bevorzugten Ausführung des Schneidkopfes 2 ist die Befestigungsaufnahme als Lagerbolzen ausgebildet und die Befestigungsvorrichtung 22 des Schneidmessers 20 als die Befestigungsöffnung 32. Der Lagerbolzen greift durch die Befestigungsöffnung 32, wobei das Schneidmesser 20 vorzugsweise in einer senkrecht zur Drehachse 14 angeordneten Schwenkebene am Lagerbolzen schwenkbar gehalten ist. In einer alternativen Ausführung des Schneidkopfes 2 kann die Befestigungsaufnahme auch durch zwei Klemmbacken gebildet sein, die das Schneidmesser 20 an der Befestigungsvorrichtung geklemmt halten. Die Klemmbacken sind vorzugsweise als Sperrklinken ausgebildet, die bei zunehmender auf das Schneidmesser 20 wirkender Fliehkraft durch einen Hebelmechanismus die Klemmkraft verstärken. In einer weiteren, alternativen Ausführung kann die Befestigungsaufnahme als eine Öffnung ausgebildet sein, durch die das Schneidmesser 20 ragt. Das Schneidmesser 20 ist an seiner Befestigungsvorrichtung 22 derart verdickt ausgebildet, dass das Schneidmesser 20 über die Befestigungsvorrichtung 22 an der Aufnahmeöffnung des Schneidkopfes 2 gehalten ist. In einer solchen Variante ist die Befestigungsvorrichtung 22 vorzugsweise keilartig, insbesondere als Halteschulter ausgebildet.

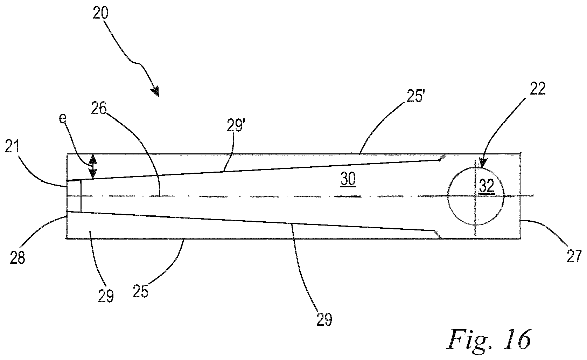

In Fig. 16 ist ein weiteres Ausführungsbeispiel des erfindungsgemäßen Schneidmessers 20 gezeigt. Die Messerschneide 25, 25' weist eine Schneidenbreite e auf, die in der Schnittebene 35 senkrecht zur Längsachse 26 des Schneidmesser 20 gemessen ist. Die Schneidenbreite e nimmt in Richtung der Längsachse 26 von der Befestigungsvorrichtung 22 weg verlaufend zu. Die Messerschneide 25, 25' besteht aus biologisch abbaubarem Werkstoff, der Grundkörper 21 hingegen ist zumindest teilweise aus einem biologisch nicht abbaubaren Kunststoff. Durch eine derartige Ausgestaltung der Messerschneide 25, 25' steht in Richtung der zweiten Stirnseite 28 des Schneidmessers 20 mehr verschleißbarer Werkstoff zur Verfügung. Dies ist von Vorteil, da mit größer werdendem Abstand ausgehend von der Befestigungsvorrichtung 22 auch die Schnittgeschwindigkeit erhöht wird. Mit zunehmender Schnittgeschwindigkeit erhöht sich auch die Belastung an der Messerschneide und damit der Verschleiß. Demnach ist vorzugsweise an den Bereichen des Schneidmessers 20, die einer hohen Schnittgeschwindigkeit und damit auch einem hohen Verschleiß unterliegen, vermehrt biologisch abbaubarer Werkstoff einzusetzen. Der Einsatz des biologisch abbaubaren Werkstoffs ist nicht auf die Messerschneide 25, 25' begrenzt, sondern kann auch am Schneideinsatz 24 erfolgen. Zudem ist an der zweiten Stirnseite 28 des Schneidmessers 20 eine Stirnkante 37 vorgesehen, die vorzugsweise ebenfalls aus einem biologisch abbaubaren Werkstoff gebildet ist. Die Stirnkante 37 verläuft von der einen Längsseite 29 zur anderen Längsseite 29'.

Ein eigenständiger erfinderischer Gedanke besteht darin, dass die Messerschneide 25, 25' zumindest teilweise, insbesondere vollständig aus einem Metall besteht, wobei der Grundkörper 21 zumindest teilweise aus einem biologisch nicht abbaubaren Kunststoff besteht. Es kann zweckmäßig sein, die Messerschneide 25, 25' aus einer Werkstoffkombination, umfassend einen biologisch abbaubaren Werkstoff und einem Metall, auszubilden. So können die hochbelasteten Bereiche der Messerschneide 25, 25' beispielsweise mit einer Metallabdeckung versehen sein, die weniger belasteten Bereiche aus dem biologisch abbaubaren Werkstoff. Die Messerschneide 25, 25' kann beispielsweise lediglich durch eine Metallverkleidung gebildet sein, die aus einer dünnen Metallschicht gebildet ist. Eine Messerschneide 25, 25' aus Metall hat den Vorteil, dass diese beim Schneiden von Gestrüpp, Gras oder Ähnlichem keinem abrasiven Verschleiß unterliegt. So kann Verschleiß an der Messerschneide 25, 25' vermieden werden. Der Einsatz einer Messerschneide 25, die zumindest teilweise aus Metall besteht, kann bei Schneidwerkzeugen, die mit geringer Drehzahl von kleiner 5000 Umdrehungen pro Minute betrieben werden, besonders vorteilhaft sein.

Ein eigenständiger Erfindungsgedanke besteht darin, dass der Hauptkörper 13 des Schneidkopfes 2 zumindest teilweise, insbesondere vollständig aus einem biologisch abbaubaren Werkstoff besteht. Vorzugsweise bestehen die Bereiche des Hauptkörpers 13 aus einem biologisch abbaubaren Werkstoff, die im Betrieb des Schneidkopfes 2 einem Verschleiß durch die Arbeitsumgebung unterliegen. Hierzu zählen insbesondere die Bauelemente des Schneidkopfes 2, die die Außenfläche des Schneidkopfes 2 bilden. Der Hauptkörper 13 des Schneidkopfes 2 ist aus einem in Arbeitshaltung des Arbeitsgerätes 1 dem Boden 12 zugewandten Hauptkörperunterteil 17 und einem dem Arbeitsgerät zugewandten Hauptkörperoberteil 18 gebildet. Insbesondere das Hauptkörperunterteil 17 steht im Betrieb des Schneidkopfes 2 immer wieder in Kontakt mit dem Boden 2, mit Gestrüpp, Gras oder Ähnlichem, wodurch das Hauptkörperunterteil 17 einem erhöhten Verschleiß unterliegt. Daher ist vorzugsweise das Hauptkörperunterteil 17 zumindest teilweise, insbesondere vollständig aus einem biologisch abbaubaren Werkstoff gebildet. Das Hauptkörperunterteil 17 bildet die Unterseite 16 des Schneidkopfes 2. Zu dem Hauptkörperunterteil 17 zählt beispielsweise auch ein Unterbodenschutz des Schneidkopfes 2. Umfasst der Schneidkopf 2 eine Weiterschalteinrichtung zum Abfädeln eines Schneidfadens von einer Fadenspule, so ist das auf der Unterseite 16 des Schneidkopfes 2 angeordnete Weiterschaltelement der Weiterschalteinrichtung, der sogenannte Bumper, Bestandteil des Hauptkörperunterteils 17. Der Bumper wird zum Abfädeln des Schneidfadens von der Fadenspule im Betrieb des Schneidkopfes 2 auf den Boden 12 gestoßen. Der Bumper ist vorzugsweise aus einem biologisch abbaubaren Werkstoff hergestellt. Der beim Kontaktieren des Bodens 12 am Bumper entstehende Abrieb ist somit biologisch abbaubar und damit besonders umweltverträglich.

## Patentansprüche

1. Schneidmesser für einen Schneidkopf,
umfassend einen Grundkörper (21) mit einer Befestigungsvorrichtung (22) zur Befestigung des Schneidmessers (20) an einem Schneidkopf (2) und eine Messerschneide (25, 25'),
**dadurch gekennzeichnet, dass** der Grundkörper (21) und die Messerschneide (25, 25') aus einem biologisch abbaubaren Naturstoff bestehen oder dass der Grundkörper (21) aus einem nicht biologisch abbaubaren Kunststoff besteht und die Messerschneide (25, 25') zumindest teilweise aus einem biologisch abbaubaren Werkstoff besteht.

2. Schneidmesser nach Anspruch 1,
**dadurch gekennzeichnet, dass** der biologisch abbaubare Werkstoff ein Werkstoff insbesondere aus der Gruppe der biologisch abbaubaren Naturwerkstoffe und der biologisch abbaubaren Kunststoffe ist.

3. Schneidmesser nach Anspruch 1 oder 2,
**dadurch gekennzeichnet, dass** die Messerschneide (25, 25') aus Holz, insbesondere Hartholz besteht.

4. Schneidmesser nach Anspruch 1,
**dadurch gekennzeichnet, dass** die Messerschneide (25, 25') an dem Grundkörper (21) ausgebildet ist.

5. Schneidmesser nach Anspruch 1,
**dadurch gekennzeichnet, dass** die Messerschneide (25, 25') und der Grundkörper (21) einteilig ausgebildet sind und aus dem gleichen Werkstoff bestehen.

6. Schneidmesser nach Anspruch 1,
**dadurch gekennzeichnet, dass** der Grundkörper (21) einen Träger (23) und einen Schneideinsatz (24) umfasst, wobei der Schneideinsatz (24) durch den Träger (23) gehalten ist und die Messerschneide (25, 25') an dem Schneideinsatz (24) angeordnet ist.

7. Schneidmesser nach Anspruch 6,
**dadurch gekennzeichnet, dass** der Träger (23) aus einem biologisch nicht abbaubaren Kunststoff gebildet ist.

8. Schneidmesser nach Anspruch 6,
**dadurch gekennzeichnet, dass** der Schneideinsatz (24) aus einem biologisch abbaubaren Werkstoff besteht.

9. Schneidmesser nach Anspruch 6;
**dadurch gekennzeichnet, dass** die Messerschneide (25, 25') an dem Schneideinsatz (24) ausgebildet ist und der Schneideinsatz (24) mit der Messerschneide (25, 25') einteilig aus dem gleichen Werkstoff gebildet sind.

10. Schneidmesser nach Anspruch 6,
**dadurch gekennzeichnet, dass** der Schneideinsatz (24) mindestens teilweise durch den Träger (23) umspritzt ist.

11. Schneidmesser nach Anspruch 6,
**dadurch gekennzeichnet, dass** der Schneideinsatz (24) an dem Träger (23) in Längsrichtung (26) des Schneidmessers (20) formschlüssig gehalten ist.

12. Schneidmesser nach Anspruch 1,
**dadurch gekennzeichnet, dass** im Grundkörper (21) mindestens eine Aussparung (44), insbesondere mindestens ein Schlitz, vorgesehen ist.

13. Schneidmesser nach Anspruch 1,
**dadurch gekennzeichnet, dass** die Messerschneide (25, 25') aus zwei Außenschichten (45, 47) und einer zwischen den beiden Außenschichten (45, 47) angeordneten Innenschicht (46) gebildet ist, wobei die Außenschichten (45, 47) eine geringere Festigkeit als die Innenschicht (46) aufweisen.

14. Schneidmesser nach Anspruch 1,
**dadurch gekennzeichnet, dass** die Messerschneide (25, 25') eine wasserabweisende Beschichtung aufweist.

15. Schneidkopf für eine Motorsense,
umfassend einen Hauptkörper (13) und ein Schneidmesser (20),
wobei der Hauptkörper (13) im Betrieb einer Motorsense um seine Drehachse (14) drehend antreibbar ist, wobei am Hauptkörper (13) mindestens eine Befestigungsaufnahme (15) vorgesehen ist und das Schneidmesser (20) an der Befestigungsaufnahme (15) gehalten ist,
wobei das Schneidmesser (20) einen Grundkörper (21) und eine Messerschneide (25, 25') umfasst,
**dadurch gekennzeichnet, dass** der Grundkörper (21) und die Messerschneide (25, 25') aus einem biologisch abbaubaren Naturstoff bestehen oder dass der Grundkörper (21) aus einem nicht biologisch abbaubaren Kunststoff besteht und die Messerschneide (25, 25') zumindest teilweise aus einem biologisch abbaubaren Werkstoff besteht.

16. Schneidkopf nach Anspruch 15,
**dadurch gekennzeichnet, dass** der Schneidkopf (2) eine in Arbeitshaltung der Motorsense (1) dem Boden (12) zugewandte Unterseite (16) aufweist, wobei die Unterseite (16) des Schneidkopfes (2) aus einem biologisch abbaubaren Werkstoff besteht.
